# EUROPEAN PATENT SPECIFICATION

(11) **EP 1 218 952 B1**
(45) Date of publication and mention of the grant of the patent: **13.04.2005**
(21) Application number: 00967174.4
(22) Date of filing: 29.09.2000
(51) Int. Cl.: H01M 2/16, H01M 10/40, H01M 2/14

(54) **ELECTROCHEMICAL CELLS HAVING ULTRATHIN SEPARATORS AND METHODS OF MAKING THE SAME**
ELEKTROCHEMISCHE ZELLEN MIT ULTRADÜNNEN SEPARATOREN UND HERSTELLUNGSVERFAHREN
CELLULES ELECTROCHIMIQUES COMPRENANT DES SEPARATEURS ULTRAFINS, ET PROCEDES DE FABRICATION ASSOCIES

(30) Priority: 30.09.1999 US 410300
(43) Date of publication of application: 03.07.2002
(73) Proprietor: Eveready Battery Company, Inc., Westlake, Ohio 44145-0616 (US)
(72) Inventor: SCHUBERT, Mark, A., Brunswick, OH 44212 (US); HUANG, Weiwei, Westlake, OH 44145 (US)
(74) Representative: Weber, Thomas, Dr.Dipl.-Chem.
(86) International application number: PCT/US2000/026967
(87) International publication number: WO 2001/024291

(56) References cited:
- EP-A- 0 834 938
- WO-A-00/36672
- WO-A-96/20504
- WO-A-97/16863
- US-A- 5 211 827
- PATENT ABSTRACTS OF JAPAN vol. 1996, no. 02, 29 February 1996 (1996-02-29) & JP 07 272771 A (AGENCY OF IND SCIENCE & TECHNOL;OTHERS: 01), 20 October 1995 (1995-10-20)

## Description

This invention relates to the field of electrochemical cells and more specifically to separators for electrochemical cells.

There is an increasing demand for batteries having improved discharge efficiency at high discharge rates. One method to obtain high rate battery performance is to increase the interfacial area between the electrodes. This method usually decreases cell capacity by increasing the separator volume. A frequently used configuration for high discharge rate batteries is a spiral wound electrode assembly, also known as a jellyroll type assembly, in which a laminate comprising a positive electrode, a negative electrode, and a separator sheet or layer located between the positive electrode and the negative electrode, is spirally wound to provide a high surface area between the electrodes, whereby a high discharge rate is achievable.

As with generally any battery, the area of the separator in a spiral wound electrode assembly is about equal to the interfacial area between the electrodes. Accordingly, for any increase in interfacial area between the electrodes, there is a corresponding increase in the surface area of the separator. Therefore, for any particular separator material, and any particular battery size, as the interfacial area between the electrodes is increased, the separator area increases and, therefore, the volume of separator material in the battery increases. When the separator occupies more volume in a battery, there is less volume available for electrode materials. As a result, an attempt to improve high rate discharge efficiency by increasing the interfacial area between the electrodes will result in reduced capacity unless a thinner separator is used.

Separators are typically paper sheets or cellophane films disposed between the electrodes. In order to maximise battery capacity, the paper and cellophane separators are already about as thin as they can be without being too fragile to allow handling and installation of the separator in the battery assembly. Also, thinner paper separators will result in shorting between the electrodes because of the porosity of the fibrous structure. Accordingly, it is not currently practical to improve discharge efficiency at high discharge rates using conventional paper sheets or cellophane films as separators without sacrificing cell capacity.

Copending US Patent Application No. 09/216,571 discloses an improved method of constructing a battery using a separator which is installed within the battery without a folding operation or any other steps involving manipulation of a separator sheet or film. The method involves forming a separator directly on an electrode by applying a coating composition comprising a polymer or gel dispersed in a polar solvent to the surface of the electrode and solidifying the materials in the applied coating composition. An advantage of this method is that the resulting separator is thinner than conventional paper and cellulose separators, whereby improved volumetric efficiency (i.e., greater capacity for a given volume) may be achieved. The materials disclosed in this document (e.g., polymers such as carrageenan and hydroxyethyl cellulose) can be used for forming separators having a thickness of less than about 0.02 inches (about 500 micrometres) and more preferably less than about 0.005 inches (about 127 micrometres). While these materials can be advantageously used to provide improvements in discharge efficiency at high discharge rates, improvements in cell capacity, or both, as compared with conventional paper and cellulose film separators, it would be desirable to provide even greater improvements in discharge efficiency at high discharge rates, while achieving a cell capacity which is equivalent to that of conventional electrochemical cells having a paper or cellophane film separator. Accordingly, even thinner separators than those described in US Patent Application No. 09/216,571 are desired.

WO-A-97/16863 suggests the possibility of electrochemical cells fabricated from a single fibre containing an electrode or active material of an electrode, a separator, an electrolyte, and the active material of a second electrode or a second electrode. Also suggested is the possibility of a cell design fabricated from two fibres in contact with each other, one containing an electrode, a separator, and an electrolyte, and the other containing a second electrode. The author of the WO-A-97/16863 application has suggested that a preferred method which may be used to form a thin layer of an insulator or separator material with a porous, open structure around a fibrous electrode would be to embed a fibrous electrode inside the bore of a hollow fibre during a spinning process by pulling the fibrous electrode through a bore-former tube of a spinneret as the insulator or separator material is extruded through an orifice. It is suggested that a membrane structure can be formed around the fibrous electrode as the coated fibre is pulled through a quenching media such as a solvent or a gas. The author has also suggested that a layer of an insulator or separator material can be formed around a fibrous electrode by dip coating or spray coating the fibrous electrode using a polymer formulation and inserting the coated fibrous electrode into a quenching media or a coagulation bath. It was also suggested that processes similar to those processes used for insulating electrical wires, such as plasma or vapour deposition or polymerisation, may be used to form a coating which can be transformed into a porous, permeable membrane by leaching or punching submicron holes into the material using lasers. It was suggested that the porous wall of the membrane may have a thickness of a few micrometres to a few hundred micrometres. The author of WO-A-97/16863 has suggested that the membrane (separator) material may be selected from polymers such as polypropylene, polysulfone, polyethylene, regenerated cellulose acetate, and other polymers currently used for fabricating hollow fibre membranes, including glass and ceramics. The amended claims, received by the International Bureau of the World Intellectual Property Organization on April 9, 1997, require a separator having a thickness from about 0.1 micrometer to about 5 millimetres. The WO-A-97/16863 application does not provide any specific examples. Although WO-A-97/16863 discloses the desirability of very thin separators for electrochemical cells, it does not provide sufficient guidance to place such electrochemical cells into the possession of those having ordinary skill in the art.

Therefore, there remains a need for methods which may actually be employed in practice to produce electrochemical cells having very thin separators, and for the resulting electrochemical cells. In particular, it would be highly desirable to provide methods for producing electrochemical cells having a separator with a thickness of about 100 micrometres or less. Such cells would provide a large increase in high rate discharge performance, as compared with a cell having a conventional paper separator, without any reduction in cell capacity.

We have now found that this may be achieved, surprisingly, by the methods and batteries in accordance with the present invention. In particular, the present invention provides methods of forming a thin, non-porous, hydrophilic polymer film separator for use in a battery, and to the resulting batteries comprising a first electrode, a second electrode, and a polymer separator positioned between the first electrode and second electrode, wherein the polymer separator is a non-porous hydrophilic film.

Accordingly, in one aspect, the present invention provides
a method of forming a separator on a substrate comprising:
applying a flowable coating composition to the substrate; and
converting the flowable coating composition applied to the substrate into a non-porous, hydrophilic polymer film separator wherein the flowable coating composition is a polymer electrolyte solution comprising electrostatically charged polymers in aqueous solution and the polymeric coating composition is converted by electrostatically depositing electrostatically charged polymers from the solution.

In a second aspect, the present invention provides
A method of forming a separator on a substrate comprising:
applying a flowable coating composition to the substrate; and
converting the flowable coating composition applied to the substrate into a non-porous, hydrophilic polymer film separator wherein the flowable coating composition comprises at least one member of the group consisting of polymerisable oligomers and polymerisable monomers, and the coating composition is converted by polymerising polymerisable material in the composition by electrochemically initiated polymerisation.

Accordingly, in one aspect, the present invention provides a method of forming a separator on a substrate comprising:
applying a flowable coating composition to the substrate; and
converting the flowable coating composition applied to the substrate into a non-porous, hydrophilic polymer film separator.

In a second aspect, the present invention provides a battery comprising a first electrode, a second electrode, and a polymer separator positioned between the first electrode and second electrode, the polymer separator being a non-porous, hydrophilic film.

The methods of this invention involve forming a thin non-porous, hydrophilic polymeric film separator. These methods generally involve applying a thin (e.g., less than 100 micrometres) flowable coating composition to a substrate and subsequently converting the polymeric materials in the coating to form a non-flowable, non-porous, hydrophilic polymeric film separator.

The expression "flowable coating composition" as used herein refers to a composition which can flow into and around the surfaces of a substrate, such as an electrode, and adhere to and coat the substrate. Thus, the flowable coating composition may be, for example, a polymeric composition comprising polymers in solution, a polymer electrolyte solution comprising electrostatically charged polymers in aqueous solution, a polymer melt at a temperature above its melting point, or a liquid composition comprising polymerisable oligomer and/or monomer materials.

The expression "non-porous" as used herein means that the polymer film separator is substantially free of pores having a size of 1 micrometre or more, preferably substantially free of pores having a size of 0.4 micrometres or more, and more preferably substantially free of pores having a size of 100 nanometres or more.

The polymeric separator may be formed directly on a surface of an electrode. Alternatively, the polymeric separator may be formed on a substrate which is not an electrode, removed from the substrate, and installed in a battery. For example, as will be described herein below, a cup-shaped separator can be formed by dip coating a solubilised nolymer material onto an end of a cylindrical glass rod, and subsequently solidifying and separating the polymeric material from the glass rod.

The methods of this invention can be applied to form thin separators on exterior surfaces of a substrate or on interior surfaces of a porous substrate. For example, the methods of this invention can be employed to form a thin layer of separator material on the surfaces of pores in a porous electrode, such as a sintered metal electrode or a metal foam electrode.

Preferably the separator thickness is about 100 micrometres or less, more preferably less than 60 micrometres, yet more preferably less than 40 micrometres, and most preferably less than 30 micrometres.

For example, an ultrathin separator may be formed on a substrate by dissolving a polymer in a solution to form a polymeric coating composition, applying the coating composition to a surface of the substrate, and solidifying the coating composition applied to the substrate to form a polymeric separator on the substrate.

Suitable and preferred polymer materials include polyvinyl alcohol, cellulose and chitosan. The polymer material used to form the separator preferably swells (changes its dimension with the absorption of electrolyte) in the presence of electrolyte.

In one example, the polymeric coating composition comprises cellulose dissolved in a solvent. The cellulose that can be dissolved in the solvent can be unmodified cellulose from substantially any source as well as regenerated cellulose. The cellulose can be of relatively low molecular weight, such as that obtained from wood or of high molecular weight, such as that obtained from cotton linters. Examples of preferred cellulose based materials include rayon and cellophane. Various derivatives of cellulose may be used, such as hydroxymethyl cellulose, hydroxyethyl cellulose, or carboxymethyl cellulose.

US-A-4,278,790 discloses a preferred cellulose solution prepared by introducing the cellulose with stirring into a solvent mixture of lithium chloride and dimethylacetamide and heating and maintaining the mixture at about 150°C. This patent discloses that if the cellulose does not dissolve immediately, the mixture may be alternately heated to about 100°C and cooled to about 50°C until solution is obtained. The cellulose solutions may contain up to about 3% by weight cellulose and from about 2 to about 8% by weight lithium chloride in dimethylacetamide. Cellophane material has been successfully tested as a separator material in the form of a tube and has shown very good performance in terms of ionic conductivity, resistance to caustic solutions, such as potassium hydroxide solutions, and temperature tolerance.

The cellulose solution can be applied to the surface of a substrate using generally any conventional method, such as dip coating, spray coating, brush coating, or roll coating. Other application techniques include centrifugal casting, spinning disk coating, slush moulding, electrostatic spraying and thermoforming.

McCormick et al., "*Solution Studies Of Cellulose In Lithium Chloride An N*,*N-Dimethylacetamide*," Macromolecules, Vol. 18, No. 12, p. 2395, 1985, describes a technique of dissolving cellulose which involves a swelling procedure followed by solvent exchange. The technique can be performed by suspending cellulose powder or cotton linters in water for a period sufficient to cause swelling of the cellulose, e.g., about 10 to 20 hours. Thereafter the excess water is removed. Next a methanol exchange is performed, in which dried methanol is added for 30 minutes and removed. A plurality of methanol exchanges (e.g., about 4) are performed. Thereafter, a plurality of exchanges (e.g., about 5) with N,N-dimethylacetamide (DMAc) are performed. The swollen cellulose may be added to a solution comprising from about 3 to about 9% LiCl by weight dissolved in DMAc. At 9% LiCl, it is possible to dissolve up to about 15% cellulose at room temperature. The cellulose/LiCl/DMAc solutions can be applied to a substrate and solidified to form a cellulose separator having a thickness of about 100 micrometres or less.

Cylindrical or cup-shaped separators have been successfully cast by dip coating a cellulose solution comprising approximately 1% cellulose by weight and approximately 5% lithium chloride by weight in dimethylacetamide onto an end of a glass rod. After coating the substrate with the cellulose solution, the coating is allowed to dry to form a cellulose separator having a thickness of about 100 micrometres or less. Alternatively, a coagulating solution can be applied to the coating, to cause the coating to congeal or coagulate and form a cellulose separator having a thickness of about 100 micrometres or less. Deionised water can be used as a coagulating solution for the cellulose solution coating.

As another example, cellulose can be dissolved in a mixture of liquid ammonia and a salt, such as ammonium thiocyanate. For example, a solution comprised of about 25% by weight ammonia and about 75% by weight of ammonium thiocyanate can be used to dissolve up to about 14 grams of cellulose per 100 millilitres of the solution. The ammonia can be replaced with an organic solvent such as tetrahydrofuran or pyridine, by adding the organic solvent to the mixture and allowing the ammonia to boil off or evaporate. The resulting cellulose solution can be applied to a substrate, and subsequently allowed to solidify or coagulate to form a separator having a thickness of about 100 micrometres or less by allowing the organic solvent to evaporate or by applying a coagulating solution, e.g., water, to the coating.

As another example, a cellulose solution can be prepared by first preparing a mixture of N-methylmorpholine oxide and water, and subsequently dissolving cellulose in the mixture to obtain a solution containing approximately 65% N-methylmorpholine oxide by weight, 10% water by weight, and 25% cellulose by weight. Another solvent which may be used is dimethyl formamide.

In accordance with another embodiment, a coagulating solution, such as an alkaline solution, e.g., a potassium hydroxide or sodium hydroxide solution, is used to solidify or gel a polymer coating solution which is applied to a substrate. As a specific example, chitosan dissolved in a 1% acidic acid water solution can be easily coated onto a substrate, preferably an electrode. After drying at a temperature of from about room temperature to about 50°C, the coating may be contacted with a coagulating solution, such as a potassium hydroxide solution, which converts the polymer into an insoluble (gel) form in the alkali medium present in alkaline cells, whereas untreated chitosan films remain water soluble. Separators made in the laboratory by applying a coating containing dissolved chitosan and treated with a potassium hydroxide solution had thicknesses from about 13 micrometres to about 38 micrometres, and exhibited high conductivity (about 50% greater than a commercially available paper separator) at room temperature. Other possible coagulating solutions include aqueous salt solutions containing salts such as sodium sulfate.

Thin, non-porous, hydrophilic polymer film separators can also be developed from a polymer electrolyte, i.e., a class of polymers with bound ionic charges. Examples include poly(acrylic acid), poly(vinylsulfonate), and poly(diallyl dimethyl ammonium chloride). The polymer electrolytes can be dissolved in an aqueous solution and applied as a coating to a substrate, such as an electrode. A thin separator material is developed as a hydrophilic polymer gel that readily swells in the presence of an alkaline electrolyte, such as a potassium hydroxide electrolyte.

As an alternative to using a polymeric composition as coating composition and converting the polymeric composition to form the film, a non-porous, hydrophilic polymer film separator can be formed directly on a substrate using a composition that contains polymerisable material that is convened by polymerisation to form the film.

In one embodiment, a non-porous, hydrophilic polymer film separator is formed directly on an electrode using electrochemically initiated polymerisation. For example, electrochemistry can be used to initiate the polymerisation of acrylic acid, methacrylic acid, vinyl sulfonate, vinyl acetate, vinyl benzyl trimethyl ammonium chloride, diallyl dimethyl ammonium chloride, ethylene oxide, propylene oxide, or other monomers onto an electrode, such as zinc foil. Electrochemistry can also be used on combinations of oligomers, monomers and polymers to form thin separator films. The electrolyte used to support this reaction may be an aqueous potassium hydroxide solution. Free radical polymerisation initiators including, but not limited to, azo initiators, peroxide initiators and redox initiators, can also be added to facilitate initiation of the polymerisation at the surface of the electrode, e.g., zinc foil.

Polyvalent compounds or cross-linking agents can be added to increase the cross-link density of the separators. Examples of cross-linking agents include various compounds having two or more reactive moieties such as vinyl moieties and/or allyl moieties. Cross-link density is selected to obtain a desirable balance between the degree of swelling in an electrolyte (which gives the separators their high ionic conductivity) and membrane strength.

The electrochemically initiated polymerisation may be performed in an electrolytic cell in which current is applied to the cell to drive a chemical reaction. This is opposite to an electrochemical cell in which a chemical reaction (or reactions) is (are) used to generate an electrical current. Zinc foil may be used as a cathode in the electrochemically initiated polymerisation. The initiator and/or monomers undergo reduction, and free radicals are produced, which initiate the chain reaction of free radical polymerisation on the surface of the zinc. The counter electrode can be made of any conductive material that does not corrode under the potentials used to drive the polymerisation reaction. A suitable material for the counter electrode is 304 stainless steel.

The electrochemical polymerisation process can be used for forming a non-porous, hydrophilic separator preferably having a thickness of 100 micrometres or less directly on a zinc foil. The resulting assembly can be used to make spiral wound (jellyroll) batteries more easily, and at a lower cost, by eliminating the difficulty of winding a conventional separator. Another advantage with this process is that electrochemically initiated polymerisations produce coatings which are free of pinhole discontinuities. If such discontinuities develop during the coating process, current density will naturally increase and polymer will form at the discontinuity. Because the electrolyte used in the electrochemical polymerisation is the same as that used in an alkaline cell, the time needed to soak up electrolyte in the separator can be minimised.

The thickness of the coatings can be easily controlled by adjusting current density, time and temperature of the reaction. Although electrochemical polymerisation can be used to form a polymeric film having a thickness of only several nanometres, the separators preferably have a thickness of at least about 0.5 micrometres (500 nanometres) up to about 100 micrometres. Separators formed directly on an electrode using electrochemical polymerisation can be used to make very thin separators which can be used in fabricating batteries having both high interfacial area between electrodes, and high capacity. Electrochemical polymerisation can be applied to irregularly shaped electrodes, e.g., open-celled foams. The nature of the electrochemical polymerisation will cause any irregularities, e.g., pits or crevices, to be coated.

It is envisioned that electrochemical polymerisation of a separator film directly onto an electrode can be performed in a continuous operation, such as by passing a continuous sheet of zinc foil through an electrolyte solution in which monomers and initiators are continuously added.

Suitable monomers include acrylic acid, methacrylic acid, vinyl sulfonate, vinyl acetate, vinyl benzyl trimethyl ammonium chloride, diallyl dimethyl ammonium chloride, ethylene oxide, and propylene oxide. An electrochemical process can also be used for depositing and cross-linking oligomers (very low molecular weight polymers) and/or polymers on a surface of an electrode. The selection of particular reactants, electrolytes, pH, concentrations and other conditions are all within the ability of those having ordinary skill.

A specific example of electrochemical polymerisation of a polymer separator on the surface of an electrode involves electropolymerisation of acrylic acid and methylacrylate in aqueous solutions at a mercury cathode. Tetraalkylammonium halides may be used as supporting electrolytes and the pH may be adjusted in the range of about 3 to about 12.

In another embodiment, a non-porous, hydrophilic polymeric film separator is formed on the surface of an electrode using localised thermal initiation of free radical polymerisation. For example, a zinc foil can be heated and subsequently immersed, while still hot, into a bath containing free radical polymerisation initiators, and monomers and/or oligomers. Thermally activatable azo, peroxide and reduction-oxidation (redox) initiators may be used. The thermally activatable initiators will initiate polymerisation at the site of highest temperature, i.e., at the surface of a heated electrode. Examples of suitable monomers include acrylic acid, methacrylic acid, vinyl sulfonate, vinyl acetate, vinyl benzyl trimethyl ammonium chloride, diallyl dimethyl ammonium chloride, ethylene oxide, and propylene oxide.

Polyvalent compounds can be added to increase cross-link density of the separator. Examples of cross-linking agents include various compounds having two or more reactive moieties such as vinyl moieties and/or allyl moieties. Cross-link density can be selected to obtain a balance in which the degree of swelling in electrolyte (which gives the separators their high ionic conductivity) and membrane strength.

Thermal initiation polymerisation can be used to form separators having a thickness of 100 micrometres or less directly on an electrode, such as zinc foil. The . process can be used for preparing electrode/separator assemblies which can be easily and inexpensively used in spiral wound battery designs. Thermally initiated polymerisation directly on a heated electrode will produce separators which are free of pinhole discontinuities, If pinholes develop during the process, heat will be conducted out of the electrode at the highest rate at these discontinuities, and preferentially initiate polymerisation at the discontinuities.

The thickness of the separator can be easily controlled by adjusting the time and temperature of the reaction. Preferably, the time and temperature of the reaction is controlled to provide a separator thickness of from about 0.5 micrometres up to about 100 micrometres. The process can be used for preparing very thin non-porous separators directly on an electrode, and the resulting electrode/separator assembly can be used for preparing a battery having a high interfacial area between electrodes, and a high capacity. The thermally initiated polymerisation can be used to form a separator directly on an irregularly shaped electrode.

Thermally initiated polymerisation can be achieved in a continuous operation. For example, a foil such as a zinc foil can be passed through a heating chamber directly into a polymerisation bath. By appropriate adjustment of the temperature and rate of passage of the foil through the bath, it is possible to continuously polymerise a separator onto the foil in the bath. Reactants are continuously added to the bath to replace what is consumed during the reaction. After being passed through the polymerisation bath, the coated foil can be passed through a washing bath to remove residual monomer and reactants. Monomers which can be used include acrylic acid, methacrylic acid, methylacrylate, ethylacrylate, butylacrylate, methylmethacrylate, and the like. The process can also be used for depositing and cross-linking oligomers (very low molecular weight polymer), monomers or a combination thereof on a surface of an electrode. The liquid coating composition may contain a polymer, in addition to the thermally initiated polymerisable materials.

As an alternative, a substrate, such as an electrode, can be coated with a solution, preferably having a relatively high viscosity, comprising polymers, oligomers, monomers, or a combination thereof, and also containing thermally activatable initiators, and subsequently heated, such as with infrared radiation, to thermally initiate polymerisation to form a thin polymer separator.

As another alternative, the substrate can be immersed in a solution comprising polymers, oligomers, monomers, or a combination thereof, and containing thermally activatable initiators, and heat may be conducted through the substrate while it is immersed in the solution to cause polymerisation at the surface of the electrode and formation of a thin polymer separator.

Thus, initiation of polymerisation and/or cross-linking to form the separator film can be achieved by heating a substrate before contacting it with a coating, after it has been coated, or while it is immersed in a thermally polymerisable/cross-linkable coating composition.

In another embodiment, a thin, non-porous polymer film separator is formed directly on a surface of an electrode using localised photo-initiation of free radical polymerisation. Photo-initiated free radical polymerisation can be used to polymerise monomers such as acrylic acid, diallyl dimethyl ammonium chloride, vinyl benzyl trimethyl ammonium chloride, and the like. For example, photo-initiated free radical polymerisation can be achieved by passing an electrode material, such as zinc foil, through a polymerisation bath containing initiators (e.g., azo initiators, peroxide initiators, or aryl ketone initiators such as IRGACURE® 184 or IRGACURE® 500 available from Ciba Specialty Chemicals), monomers and/or oligomers, and cross-linking agents. The constituents of the polymerisation bath, are selected to make a viscous fluid that adheres to the surface of the electrode foil, so that the fluid remains on the surface of the foil as the foil is vertically pulled from the bath. At a location downstream of the polymerisation bath, the coated foil is passed through a photo-initiation chamber comprising photo-lamps which direct radiation at the coated surface of the foil. The radiation initiates polymerisation of the monomers, and/or cross-linking of oligomers. The photo-initiating radiation can for example be ultraviolet radiation, X-rays, gamma-rays, α-particles, high-energy electrons or protons.

Polyvalent compounds (cross-linking agents) can be used to increase the cross-link density. Cross-link density is preferably adjusted to achieve a balance between the degree of swelling of the separator in electrolyte (which gives the separators their high ionic conductivity) and membrane strength. Examples of cross-linking agents include pentaerythritol triallyl ether, diethylene glycol divinyl ether, triethylene glycol divinyl ether, and 1,1,1-trimethylol-propane diallyl ether.

Photo-initiated polymerisation can be used for preparing thin non-porous separators directly on an electrode, and the resulting electrode/separator assembly can be used for more easily preparing inexpensive spiral wound type batteries. The thickness of the separators can be easily controlled by adjusting bath viscosity, time and temperature of the reaction. These parameters are preferably controlled to obtain a separator thickness of at least 0.5 micrometres up to about 100 micrometres. Photo-initiated polymerisation of a separator directly on an electrode can be performed either as a batch process or as a continuous process. In a continuous process, reactants are continuously added to the polymerisation bath to replace consumed reactants. After the polymerisation, the foil can be passed through a washing bath to remove residual monomer and reactants. Monomers which can be used include acrylic acid, methacrylic acid, methyl acrylate, ethyl acrylate, butyl acrylate, and methyl methacrylate.

The materials which may be used for photo-initiated, thermally initiated and electrochemical polymerisation, either by ionic or free radical chain reactions, are preferably formed from monomers, oligomers, polymers, or a combination thereof which form a stable polymer structure for high dielectric strength to electronically insulate the electrodes of an electrochemical cell. In particular, the monomers; oligomers, polymers and combinations thereof used to form the separator by way of ionic or free radical chain reactions should produce a hydrolytically stable polymer backbone.

The polymer separator is preferably hydrophilic to allow swelling with an electrolyte and to provide high ionic conductivity. Suitable hydrophilic properties can be provided by utilising monomers having polar or ionic side groups, such as hydroxyl, sulfoxyl and quaternary ammonium groups. Examples of suitable monomers include acrylic acid, methacrylic acid, vinyl sulfonate, vinyl acetate, vinyl alcohol, vinyl benzyl trimethyl ammonium chloride, diallyl dimethyl ammonium chloride, ethylene oxide and propylene oxide. The starting materials used to form the polymer separators may also comprise oligomers and polymers made from the above listed monomers and/or other monomers. Oligomers and/or polymers are preferably added to the coating compositions when it is necessary or desirable to increase the viscosity of the coating composition. The coating solutions may also contain monomers which do not include an ionic or polar side group, or which include a side group which is only slightly polar, as well as oligomers and/or polymers comprising a combination of ionic, polar and/or non-polar monomers. Examples of monomers which are non-polar or only slightly polar include alkyl acrylates, alkyl methacrylates, olefinic monomers, and styrenic monomers. The comonomers, and oligomers and/or polymers thereof, are selected to control the degree of swelling to prevent dissolution of the film in an electrolyte, and to control thermo-mechanical properties. The coating compositions may also contain multifunctional monomers for chemical cross-linking. Examples include di- and trivinyl monomers, di- and tri-allyl monomers, with specific examples including divinyl benzene, diethylene glycol divinyl ether, triethylene glycol divinyl ether, pentaerythritol triallyl ether, and 1,1,1-trimethylol-propane diallyl ether. The coating compositions may also contain comonomers, oligomers, and/or polymers which are insoluble in an electrolyte to form physical cross-links via segmented block copolymers, with a specific example being a vinyl or allyl end-capped polyethers.

The substrates which can be used in the practice of this invention include generally any surface on which a thin polymer separator can be formed. The separator can be formed on a substrate, removed from the substrate, and may be subsequently installed in a battery. More preferably, the substrate is an electrode for an electrochemical cell, so that the electrode with the separator formed on it can be installed together as a unit into an electrochemical cell. Suitable substrates include various mould surfaces, including metal and plastic mould surfaces, various electrodes, including solid electrodes such as foils, porous electrodes such as sintered metals, and carbon collectors. Examples of electrode materials on which a thin polymer separator can be formed according to the invention include zinc, lithium, aluminium, cadmium, nickel, cobalt, nickel oxide, and manganese dioxide.

In another embodiment, a thin polymer separator is formed on a metallic electrode using an electrostatic deposition technique. In this technique, a multilayer thin film may be assembled layer-by-layer through static ionic interactions. The film is self-assembled as adsorbed layers by alternatively contacting a substrate with a cationic polymer solution and an anionic polymer solution. An electrical charge may be imposed on the metallic electrode to cause a first polymer electrolyte (i.e., an electrostatically charged polymer such as a polycationic polymer or a polyanionic polymer) dissolved in water and of opposite charge to be attracted to the electrode when the electrode is immersed in a dilute aqueous solution of the polymer electrolyte. The electrostatic attraction between the electrode substrate and the polymer electrolyte coats the electrode. The coated electrode may be rinsed with water, and subsequently contacted with a second polymer electrolyte solution containing a polymer electrolyte having a change opposition to the first polymer electrolyte. The second polymer electrolyte complexes with the first polymer electrolyte through intermolecular ionic bonds forming a highly interpenetrating structure. Complexation causes both polymers to precipitate from the solution forming a coating on the electrode. The technique may be repeated as desired to build additional layers.

Depending on the pH and ionic strength of the solution, the thickness of the polymer complex layers can vary from a few tenths of a nanometre to a few nanometres. When the polymer is highly charged, it lays down flat on the charged electrode forming a very thin layer. When the backbone repulsion along a charged polymer electrolyte is shielded by solvating ions, the polymer assumes a more random coil configuration and creates a thicker layer.

A particular example involving the use of an electrostatic deposition technique involves the use of poly(acrylic acid) as the polyanion and poly(allylamine) as the polycation. The solution used for depositing the polyanion and polycation are preferably maintained at a pH of from about 4 to about 10, so that the polyanion and polycation are highly charged.

The electrostatic deposition technique is a fast and simple, aqueous based method, for coating electrodes, especially electrodes with complex shapes and irregular surfaces. This method does not rely on synthesis, evaporation or cooling. Multiple sets of immersions can be performed to build up layers of these complexes for more thickness and strength. Generally, any of a wide variety of polyanion/polycation combinations may be used.

In another embodiment, the flowable coating composition may be a molten polymer (polymer melt) which is applied to a substrate and which is converted into a non-porous polymer film separator by cooling the polymer melt to a temperature below its melting point.

In a first preferred embodiment of the first aspect; a method of forming a separator on a substrate is provided comprising:
forming an electrolyte solution comprising a solvent, an electrolyte, and a polymerisable material;
positioning the substrate and a counter electrode in the electrolyte solution; and
inducing electrochemical polymerisation at the surface of the substrate by passing an electrical current through the electrolyte solution.

In a second preferred embodiment, a method of forming a separator on a substrate is provided comprising:
coating a surface of the substrate with a liquid composition containing a polymerisable material; and
directing radiation at the coating on the surface of the substrate to initiate polymerisation of the polymerisable material, whereby the separator is polymerised on the surface of the substrate.

In a third preferred embodiment, a method of forming a separator on a substrate is provided comprising:
contacting at least a portion of the substrate with a liquid composition comprising a polymerisable material and a polymerisation initiator which is thermally activatable; and
supplying heat to the liquid composition contacting the substrate to induce polymerisation of the polymerisable material on the substrate.

In a fourth preferred embodiment, a method of forming a separator on a substrate is provided comprising:
dissolving a polymer electrolyte in a solvent to form a first polymer electrolyte solution;
contacting the first polymer electrolyte solution with the substrate to adsorb the first polymer electrolyte onto the substrate;
dissolving a second polymer electrolyte in a second solvent to form a second polymer electrolyte solution, the second polymer electrolyte having a charge opposite the charge of the first polymer electrolyte; and
contacting the substrate having the adsorbed first polymer electrolyte with the second polymer electrolyte solution to cause the second polymer electrolyte to complex with the first polymer electrolyte.

In a fifth preferred embodiment, a method of forming a separator on a substrate is provided comprising:
contacting at least a portion of the substrate with a polymeric coating composition comprising polymers in solution; and
applying a coagulating solution to the coating composition to coagulate polymer materials in the composition.

In a sixth preferred embodiment, a method of forming a separator on a substrate is provided comprising:
contacting at least a portion of the substrate with a polymeric coating composition comprising polymers in solution; and
removing solvent from the composition.

In a seventh preferred embodiment, a method of forming a.separator on a substrate is provided comprising:
contacting at least a portion of the substrate with a polymer melt; and
cooling the polymer melt to a temperature below its melting point.

In a eighth preferred embodiment, a method of forming a separator on a substrate is provided comprising:
contacting at least a portion of the substrate with a polymer electrolyte solution comprising electrostatically charged polymers in aqueous solution; and .
electrostatically depositing electrostatically charged polymers from the solution.

The present invention will be further understood by reference to the embodiments shown in the drawings, in which:
Figure 1 is a schematic representation of a laminate comprising a first electrode, a second electrode, and a non-porous, hydrophilic polymer film positioned between and separating the first electrode and the second electrode;
Figure 2 is a schematic cross-sectional representation of an electrochemical cell including a laminated electrochemical cell assembly of the type shown in Figure 1, which is spirally wound and disposed within a cylindrical can to provide a battery having a very high interfacial area between a first electrode and a second electrode;
Figure 3 is a schematic illustration of an apparatus for continuously forming a polymeric film on a metal foil using thermally initiated polymerisation; and
Figure 4 is a schematic illustration of an apparatus for continuously forming a polymeric film on a metal foil using photo-initiated free radical polymerisation.

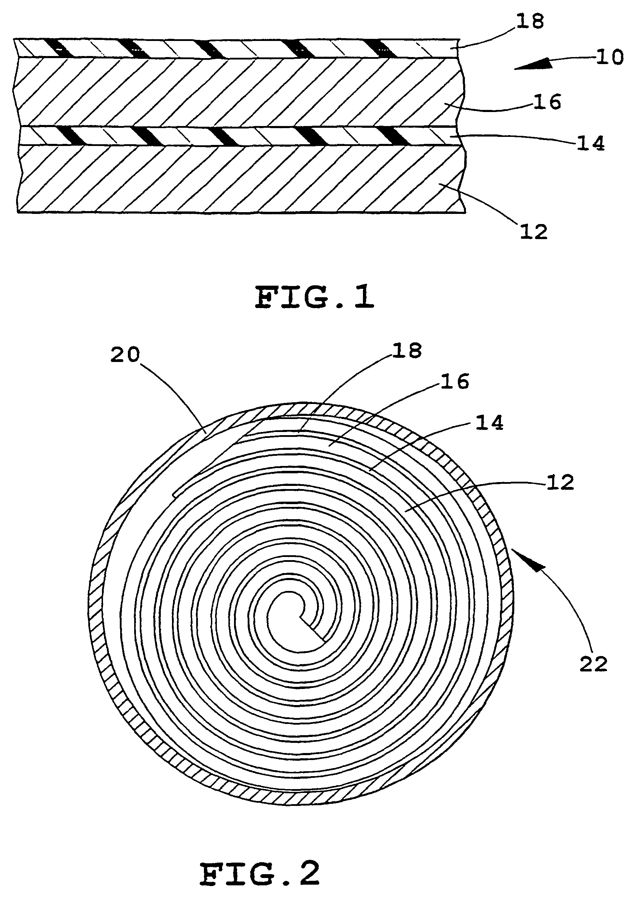

An electrochemical cell assembly 10 is shown in Figure 1. Electrochemical cell assembly 10 is in the form of a multiple layer laminate including at least a first electrode 12, and a first separator 14. The illustrated electrochemical cell assembly 10 further comprises a second electrode 16, and a second separator 18, to provide a four layer laminate in which first separator 14 is disposed between first electrode 12 and second electrode 16, and second electrode 16 is disposed between first separator 14 and second separator 18. Either electrode 12 or 16 can be a positive electrode, with the other electrode being a negative electrode. Preferably, separators 14 and 18 each have a thickness of about 100 micrometres or less. Separator 14 can be formed on or applied to electrode 12 to form a first subassembly, and separator 18 can be formed on or applied to electrode 16 to form a second subassembly. Thereafter, the second subassembly, comprising separator 18 and electrode 16 may be placed adjacent to each other, and optionally laminated to, the first subassembly comprising separator 14 and electrode 12, such as by applying heat and/or pressure. As another alternative, separators 14 and 18 can be sequentially or simultaneously opposite surfaces of electrode 16, and electrode 12 can thereafter be laminated to separator 14.

As shown in Figure 2, electrochemical cell assembly 10 can be spirally wound to form a jellyroll type structure which is deposited in a metal can 20 to form a battery 22. Figures 1 and 2 are intended to illustrate a relatively simple battery configuration which takes advantage of the methods of this invention to provide improved discharge efficiency at high discharge rates by significantly increasing the interfacial area between electrodes 12 and 16, as compared with conventional battery designs in which the interfacial area between electrodes is limited to the surface area of a cylinder-shaped electrode. Those skilled in the art will readily recognise that the principles of this invention can be applied to different, and more complicated, cell designs in which the interfacial area between the positive electrode and the negative electrode is high. In the case of cylinder-shaped batteries, the spiral wound electrochemical cell assembly shown in Figure 2 can provide a large increase in high discharge capacity, as compared with a conventional cell design in which the interfacial area between the positive electrode and the negative electrode is limited to the area of a cylinder, when separators 14 and 18 are each about 100 micrometres thick. Even greater improvements in capacity and/or high rate discharge efficiency can be achieved when separators 14 and 18 are thinner.

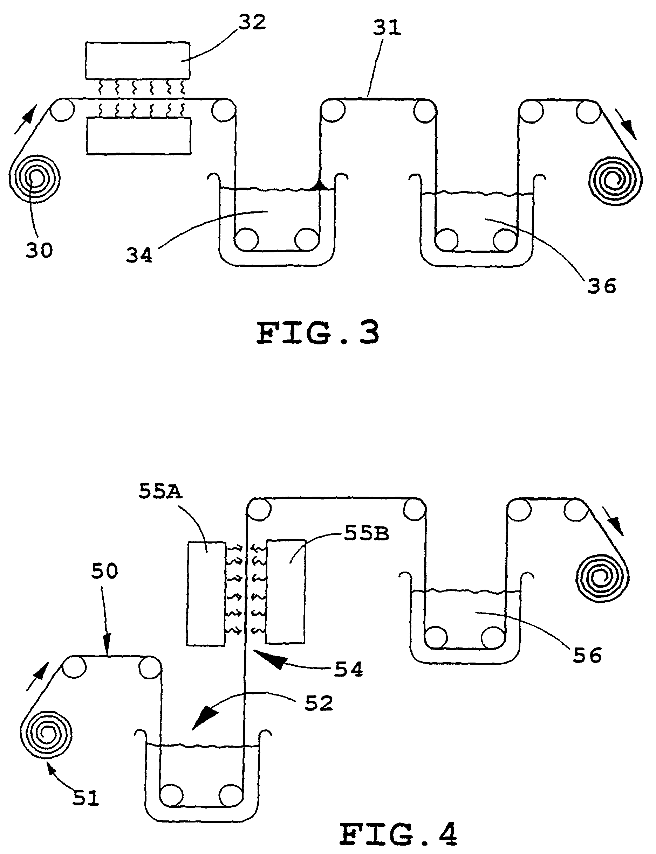

As shown in Figure 3, thermally initiated polymerisation can be achieved in a continuous operation by passing a roll 30 of zinc foil 31 through a heating chamber 32 directly into a polymerisation bath 34. By appropriate adjustment of the temperature and rate of passage of the foil through the bath, a separator is continuously polymerised onto the foil in the bath. Reactants are continuously added to the bath to replace what is consumed during the reaction. After being passed through the polymerisation bath, the coated foil is passed through a washing bath 36 to remove residual monomer and reactants.

As shown in Figure 4, photo-initiated free radical polymerisation can be achieved in a continuous operation by passing a zinc foil 50 through a polymerisation bath 52 containing initiators, monomers and/or oligomers, and cross-linking agents. The constituents of polymerisation bath 52 are selected to make a viscous fluid that adheres to the surface of zinc foil 50, so that the fluid remains on the surface of zinc foil 50 as zinc foil 50 is vertically pulled from bath 52. At a location downstream of polymerisation bath 52, the coated zinc foil 50 is passed through a photo-initiation chamber 54 comprising photo-lamps 55A and 55B, which direct photo-initiating radiation at the coated surface of zine foil 50 to initiate polymerisation of the monomers, and/or cross-linking of oligomers. Reactants are continuously added to bath 52 to replace consumed reactants. After the polymerisation, foil 50 is passed through a washing bath 56 to remove residual monomer and reactants.

## Claims

1. A method of forming a separator on a substrate comprising:
applying a flowable coating composition to the substrate; and
converting the flowable coating composition applied to the substrate into a non-porous, hydrophilic polymer film separator wherein the flowable coating composition is a polymer electrolyte solution comprising electrostatically charged polymers in aqueous solution and the polymeric coating composition is converted by electrostatically depositing electrostatically charged polymers from the solution.

2. The method according to claim 1, comprising:
dissolving a polymer electrolyte in a solvent to form a first polymer electrolyte solution;
contacting the first polymer electrolyte solution with the substrate to adsorb the first polymer electrolyte onto the substrate;
dissolving a second polymer electrolyte in a second solvent to form a second polymer electrolyte solution, the second polymer electrolyte having a charge opposite the charge of the first polymer electrolyte; and
contacting the substrate having the adsorbed first polymer electrolyte with the second polymer electrolyte solution to cause the second polymer electrolyte to complex with the first polymer electrolyte.

3. The method according to claim 2, wherein additional layers are formed by alternately coating the substrate with a polymer electrolyte having a first electrical charge, and a polymer electrolyte having a second electrical charge which is opposite to the first electrical charge until a desired thickness is achieved.

4. A method of forming a separator on a substrate comprising:
applying a flowable coating composition to the substrate; and
converting the flowable coating composition applied to the substrate into a non-porous, hydrophilic polymer film separator wherein the flowable coating composition comprises at least one member of the group consisting of polymerisable oligomers and polymerisable monomers, and the coating composition is converted by polymerising polymerisable material in the composition by electrochemically initiated polymerisation.

5. The method according to claim 4, comprising:
forming an electrolyte solution comprising a solvent, an electrolyte, and a polymerisable material;
positioning the substrate and a counter electrode in the electrolyte solution; and
inducing electrochemical polymerisation at the surface of the substrate by passing an electrical current through the electrolyte solution.

6. The method according to claim 5, wherein the electrolyte solution further comprises a polymerisation initiator.

7. The method according to claim 5 or claim 6, wherein the counter electrode is stainless steel.

8. The method according to any of claims 4 to 7, wherein the substrate is a porous electrode, and the separator is formed on internal pore surfaces of the porous electrode.

9. The method according to any of claims 4 to 8, wherein the polymerisable material includes at least one monomer selected acrylic acid, methacrylic acid, vinyl sulfonate, vinyl acetate, vinyl benzyl trimethyl ammonium chloride, diallyl dimethyl ammonium chloride, ethylene oxide, propylene oxide and styrene sulfonate.

10. The method according to any of claims 4 to 9, wherein the polymerisable material further includes at least one cross-linking agent.

11. The method according to claim 10, wherein the cross-linking agent is a compound having two or more reactive moieties selected from the group consisting of vinyl moieties and allyl moieties.

12. The method according to claim 11, wherein the cross-linking agent is selected from pentaerythritol triallyl ether, divinyl benzene, diethylene glycol divinyl ether, triethylene glycol divinyl ether, 1,1,1-trimethylol-propane diallyl ether, allyl end-capped polyethylene glycol and allyl end-capped polypropylene glycol.

13. The method according to any preceding claim, wherein the polymer film swells in potassium hydroxide electrolyte.

14. The method according to any preceding claim, wherein the polymer film comprises at least one member of the group consisting of cellulose, a derivative of cellulose, a polymer of acrylic acid, a polymer of methacrylic acid, a polymer of vinyl sulfonate, a polymer of vinyl acetate, polyvinyl alcohol, a polymer of vinyl benzyl trimethyl ammonium chloride, a polymer of diallyl dimethyl ammonium chloride, a polymer of ethylene oxide, a polymer of propylene oxide, and a polymer of styrene sulfonate.

15. The method according to any preceding claim, wherein the substrate is an electrode material.

16. The method according to claim 15, wherein the substrate is an electrode material selected from zinc, lithium, aluminium, cadmium, nickel, titanium, cobalt, nickel oxide, and manganese oxide.

17. The method according to claim 15 or 16, wherein the substrate is a metallic electrode.

18. The method according to claim 17, wherein the electrode material is a zinc foil.

## Patentansprüche

1. Verfahren zur Bildung eines Separators auf einem Substrat, umfassend:
Auftragen einer fließfähigen Beschichtungszusammensetzung auf das Substrat und
Umwandeln der auf das Substrat aufgetragenen fließfähigen Beschichtungszusammensetzung zu einem nichtporösen, hydrophilen Polymerfilmseparator, wobei die fließfähige Beschichtungszusammensetzung eine Polymerelektrolytlösung ist, die elektrostatisch geladene Polymere in wässriger Lösung umfasst, und die polymere Beschichtungszusammensetzung durch die elektrostatische Abscheidung von elektrostatisch geladenen Polymeren aus der Lösung umgewandelt wird.

2. Verfahren nach Anspruch 1, umfassend:
Auflösen eines Polymerelektrolyts in einem Lösungsmittel, wodurch eine erste Polymerelektrolytlösung gebildet wird,
In-Kontakt-Bringen der ersten Polymerelektrolytlösung mit dem Substrat, wodurch die erste Polymerelektrolytlösung auf dem Substrat adsorbiert wird,
Auflösen eines zweiten Polymerelektrolyts in einem zweiten Lösungsmittel, wodurch eine zweite Polymerelektrolytlösung gebildet wird, wobei die zweite Polymerelektrolytlösung eine Ladung hat, die zur Ladung des ersten Polymerelektrolyts entgegengesetzt ist, und
In-Kontakt-Bringen des Substrats mit dem adsorbierten ersten Polymerelektrolyt mit der zweiten Polymerelektrolytlösung, wodurch eine Komplexierung des zweiten Polymerelektrolyts mit dem ersten Polymerelektrolyt bewirkt wird.

3. Verfahren nach Anspruch 2, wobei zusätzliche Schichten durch das abwechselnde Beschichten des Substrats mit einem Polymerelektrolyten mit einer ersten elektrischen Ladung und einem Polymerelektrolyten mit einer zweiten elektrischen Ladung, die zur ersten elektrischen Ladung entgegengesetzt ist, bis eine gewünschte Dicke erreicht ist, gebildet werden.

4. Verfahren zur Bildung eines Separators auf einem Substrat, umfassend:
Auftragen einer fließfähigen Beschichtungszusammensetzung auf das Substrat und
Umwandeln der auf das Substrat aufgetragenen fließfähigen Beschichtungszusammensetzung zu einem nichtporösen, hydrophilen Polymerfilmseparator, wobei die fließfähige Beschichtungszusammensetzung wenigstens ein aus der aus polymerisierbaren Oligomeren und polymerisierbaren Monomeren bestehenden Gruppe ausgewähltes Element umfasst und die Beschichtungszusammensetzung umgewandelt wird, indem polymerisierbares Material in der Zusammensetzung durch eine elektrochemisch initiierte Polymerisation polymerisiert wird.

5. Verfahren nach Anspruch 4, umfassend:
Bildung einer Elektrolytlösung, die ein Lösungsmittel, einen Elektrolyten und ein polymerisierbares Material umfasst,
Positionieren des Substrats und einer Gegenelektrode in der Elektrolytlösung und
Induzieren einer elektrochemischen Polymerisation an der Oberfläche des Substrats durch das Leiten eines elektrischen Stroms durch die Elektrolytlösung.

6. Verfahren nach Anspruch 5, wobei die Elektrolytlösung weiterhin einen Polymerisationsinitiator umfasst.

7. Verfahren nach Anspruch 5 oder Anspruch 6, wobei die Gegenelektrode rostfreier Stahl ist.

8. Verfahren nach einem der Ansprüche 4 bis 7, wobei das Substrat eine poröse Elektrode ist und der Separator auf inneren Porenflächen der porösen Elektrode ausgebildet ist.

9. Verfahren nach einem der Ansprüche 4 bis 8, wobei das polymerisierbare Material wenigstens ein Monomer einschließt, dass aus Acrylsäure, Methacrylsäure, Vinylsulfonat, Vinylacetat, Vinylbenzyltrimethylammoniumchlorid, Diallyldimethylammoniumchlorid, Ethylenoxid, Propylenoxid und Styrolsulfonat ausgewählt ist.

10. Verfahren nach einem der Ansprüche 4 bis 9, wobei das polymerisierbare Material weiterhin wenigstens ein Vernetzungsmittel einschließt.

11. Verfahren nach Anspruch 10, wobei das Vernetzungsmittel eine Verbindung mit zwei oder mehr reaktiven Resten ist, die aus der aus Vinylresten und Allylresten bestehenden Gruppe ausgewählt sind.

12. Verfahren nach Anspruch 11, wobei das Vernetzungsmittel aus Pentaerythrittriallylether, Divinylbenzol, Diethylenglycoldivinylether, Triethylenglycoldivinylether, 1,1,1-Trimethylolpropandiallylether, mit Allyl endverkapptem Polyethylenglycol und mit Allyl endverkapptem Polypropylenglycol ausgewählt ist.

13. Verfahren nach einem der vorhergehenden Ansprüche, wobei der Polymerfilm in einem Kaliumhydroxid-Elektrolyten aufquillt.

14. Verfahren nach einem der vorhergehenden Ansprüche, wobei der Polymerfilm wenigstens ein Element aus der aus Cellulose, einem Derivat von Cellulose, einem Polymer von Acrylsäure, einem Polymer von Methacrylsäure, einem Polymer von Vinylsulfonat, einem Polymer von Vinylacetat, Polyvinylalkohol, einem Polymer von Vinylbenzyltrimethylammoniumchlorid, einem Polymer von Diallyldimethylammoniumchlorid, einem Polymer von Ethylenoxid, einem Polymer von Propylenoxid und einem Polymer von Styrolsulfonat bestehenden Gruppe umfasst.

15. Verfahren nach einem der vorhergehenden Ansprüche, wobei das Substrat ein Elektrodenmaterial ist.

16. Verfahren nach Anspruch 15, wobei das Substrat ein Elektrodenmaterial ist, das aus Zink, Lithium, Aluminium, Cadmium, Nickel, Titan, Kobalt, Nickeloxid und Manganoxid ausgewählt ist.

17. Verfahren nach Anspruch 15 oder 16, wobei das Substrat eine metallische Elektrode ist.

18. Verfahren nach Anspruch 17, wobei das Elektrodenmaterial eine Zinkfolie ist.

## Revendications

1. Procédé de formation d'un séparateur sur un substrat comprenant :
appliquer une composition d'enrobage capable de couler au substrat ; et
convertir la composition d'enrobage capable de couler appliquée au substrat en un séparateur en film polymère hydrophile non poreux, dans lequel la composition d'enrobage capable de couler est une solution d'électrolyte polymère comprenant des polymères chargés électrostatiquement en solution aqueuse et la composition d'enrobage polymère est convertie en déposant de manière électrostatique des polymères chargés électrostatiquement à partir de la solution.

2. Procédé selon la revendication 1, comprenant :
dissoudre un électrolyte polymère dans un solvant pour former une première solution d'électrolyte polymère ;
mettre en contact la première solution d'électrolyte polymère avec le substrat pour adsorber le premier électrolyte polymère sur le substrat ;
dissoudre un second électrolyte polymère dans un second solvant pour former une seconde solution d'électrolyte polymère, le second électrolyte polymère ayant une charge opposée de la charge du premier électrolyte polymère ; et
mettre en contact le substrat ayant le premier électrolyte polymère adsorbé avec la seconde solution d'électrolyte polymère pour entraîner le second électrolyte polymère à former un complexe avec le premier électrolyte polymère.

3. Procédé selon la revendication 2, dans lequel des couches supplémentaires sont formées en enrobant alternativement le substrat avec un électrolyte polymère ayant une première charge électrique et un électrolyte polymère ayant une seconde charge électrique qui est opposée de la première charge électrique jusqu'à ce qu'une épaisseur souhaitée soit obtenue.

4. Procédé de formation d'un séparateur sur un substrat comprenant :
appliquer une composition d'enrobage capable de couler au substrat ; et
convertir la composition d'enrobage capable de couler appliquée au substrat en un séparateur en film polymère hydrophile non poreux, dans lequel la composition d'enrobage capable de couler comprend au moins un membre du groupe consistant en oligomères polymérisables et monomères polymérisables et la composition d'enrobage est convertie en polymérisant la matière polymérisable dans la composition en lançant de manière électrochimique la polymérisation.

5. Procédé selon la revendication 4, comprenant :
former une solution d'électrolyte comprenant un solvant, un électrolyte et une matière polymérisable ;
positionner le substrat et une contre-électrode dans la solution d'électrolyte ; et
induire une polymérisation électrochimique à la surface du substrat en faisant passer un courant électrique à travers la solution d'électrolyte.

6. Procédé selon la revendication 5, dans lequel la solution d'électrolyte comprend en outre un initiateur de polymérisation.

7. Procédé selon la revendication 5 ou la revendication 6, dans lequel la contre-électrode est en acier inoxydable.

8. Procédé selon l'une quelconque des revendications 4 à 7, dans lequel le substrat est une électrode poreuse et le séparateur est formé sur les surfaces internes des pores de l'électrode poreuse.

9. Procédé selon l'une quelconque des revendications 4 à 8, dans lequel la matière polymérisable inclut au moins un monomère sélectionné parmi acide acrylique, acide méthacrylique, sulfonate de vinyle, acétate de vinyle, chlorure d'ammonium vinyl benzyl triméthylique, chlorure d'ammonium diallyl diméthylique, oxyde d'éthylène, oxyde de propylène et sulfonate de styrène.

10. Procédé selon l'une quelconque des revendications 4 à 9, dans lequel la matière polymérisable inclut en outre au moins un agent de réticulation.

11. Procédé selon la revendication 10, dans lequel l'agent de réticulation est un composé ayant deux fragments réactifs ou plus sélectionnés dans le groupe consistant en fragments de vinyle et fragments d'allyle.

12. Procédé selon la revendication 11, dans lequel l'agent de réticulation est sélectionné parmi l'éther pentaérythritol triallylique, le divinyl benzène, l'éther diéthylène glycol divinylique, l'éther triéthylène glycol divinylique, l'éther 1,1,1-triméthylol-propane diallylique, le polyéthylène glycol coiffé aux extrémités par un allyle et le polypropylène glycol coiffé aux extrémités par un allyle.

13. Procédé selon l'une quelconque des revendications précédentes, dans lequel le film polymère gonfle dans un électrolyte d'hydroxyde de potassium.

14. Procédé selon l'une quelconque des revendications précédentes, dans lequel le film polymère comprend au moins un membre du groupe consistant en cellulose, un dérivé de cellulose, un polymère de l'acide acrylique, un polymère de l'acide méthacrylique, un polymère de sulfonate de vinyle, un polymère d'acétate de vinyle, un alcool polyvinylique, un polymère de chlorure vinyl benzyl triméthyl ammonium, un polymère de chlorure de diallyl diméthyl ammonium, un polymère d'oxyde d'éthylène, un polymère d'oxyde de propylène et un polymère de sulfonate de styrène.

15. Procédé selon l'une quelconque des revendications précédentes, dans lequel le substrat est un matériau d'électrode.

16. Procédé selon la revendication 15, dans lequel le substrat est un matériau d'électrode sélectionné parmi le zinc, le lithium, l'aluminium, le cadmium, le nickel, le titane, le cobalt, l'oxyde de nickel et l'oxyde de manganèse.

17. Procédé selon la revendication 15 ou 16, dans lequel le substrat est une électrode métallique.

18. Procédé selon la revendication 17, dans lequel le matériau d'électrode est une feuille de zinc.
